# EUROPEAN PATENT APPLICATION

(11) **EP 3 085 632 A1**
(43) Date of publication of application: **26.10.2016**
(21) Application number: 14872547.6
(22) Date of filing: 12.12.2014
(51) Int. Cl.: B65D 8/00, B32B 1/02, B32B 1/08, B41M 5/00, B41M 5/50, B41M 5/52, B65D 25/20

(54) **PRINTED FILM FOR VESSEL, AND METHOD FOR MANUFACTURING SAME**

(30) Priority: 17.12.2013 JP 2013260065; 08.01.2014 JP 2014001413
(71) Applicant: Toyo Seikan Co., Ltd., Tokyo 141-8640 (JP)
(72) Inventor: YAMADA, Kouji, Yokohama-shi Kanagawa 230-0001 (JP); SAITOU, Yukiko, Yokohama-shi Kanagawa 230-0001 (JP); YUKAWA, Yasuhiro, Yokohama-shi Kanagawa 230-0001 (JP)
(74) Representative: Raynor, Stuart Andrew
(86) International application number: PCT/JP2014/082991
(87) International publication number: WO 2015/093405

(57) **Abstract**

A printed film for containers of this invention includes a transparent film ink-jet images formed thereon by an ink-jet printing and other-printing images formed by a printing system other than the ink-jet printing, the ink-jet images being formed between a top coating and an underlying layer, and the other-printing images being formed between the underlying layer and an adhesive layer enabling variable images to be ink-jet printed thereon in combination making it, therefore, possible to cope with the designs for many kinds of products in small lots that could not be done by only the printing system such as gravure printing other than the ink-jet printing, the printed images excellently reproducing image densities that could not be attained by the ink-jet printing only. The invention, further, provides a method of producing a printed film maintaining good productivity.

## Description

### Technical Field:

This invention relates to a printed film to be stuck onto the containers and a method of producing the same. More specifically, the invention relates to a printed film having, in combination, images that are ink-jet printed and images printed by other printing system than the ink-jet printing, and to a method of producing the same.

### Background Art:

For the purposes of indicating the contents, appealing advertisement and enhancing commercial values, it is a practice to stick a printed film onto the outer surfaces of metal cans (labeled cans) such as seamless cans and welded cans and onto the outer surfaces of bag-like containers (pouches), the printed film being a transparent resin film on which images are formed by plate-type printing such as gravure printing.

Accompanying diversifying designs in recent years, a multiplicity of colors have now been used for the printing. Nowadays, not less than eight colors are necessary for the gravure printing, too, requiring intaglio cylinders for each of the colors; i.e., necessitating the making of a number of cylinders.

The gravure printing is suited for the production of products in a large lot, but needs a large cost and time for the making of intaglio cylinders. Therefore, the gravure printing is not suited for the production of many kinds of products in small lots. To execute the printing on the products of many kinds in small lots, the plate cylinders must be frequently changed. That is, a large cost and time are required for changing the plate cylinders inclusive of making intaglio cylinders. Besides, the intaglio cylinders fabricated to meet the designs of small lots spending a large cost and time must be discarded after having printed the products in small lots. Further, a dot printing that has been much desired in recent years requires high-precision cylinders in combination. To realize a desired design, therefore, the cylinders must be corrected or retouched in many cases. In view of the above circumstances, too, it can be said that the gravure printing is not advantageous for the production of products of many kinds in small lots.

In the field of the containers, too, the contents (e. g. , beverages) are diversifying, and a variety of kinds of products have been produced in small lots. It is, therefore, a trend to produce even those printed films that are to be stuck to the above containers produced in many kinds in small lots. Under such circumstances, therefore, there has also been proposed to execute the ink-jet printing by utilizing an ink-jet printer that is capable of conducting the printing based on the electronic data input to a computer, that needs no cylinder making, that enables the printing to be easily changed, and that is suited for printing the products of a variety of kinds in small lots.

The following patent document 1, for example, is disclosing a printed film obtained by subjecting a thin film to the gravure printing and then to the ink-jet printing.

### Prior Art Document:

### Patent Document:

Patent document 1: JP-A-2005-59458

### Outline of the Invention: Problems that the Invention is to Solve:

The ink-jet system, however, has a printing speed lower than that of the plate-type printing such as gravure printing. If the printing is continued by combining them together, therefore, the ink-jet printing is conducted at a controlled rate and causes the productivity to decrease. On the other hand, if the film that is gravure-printed is stored and if it is attempted, as required, to ink-jet print the images thereon, then the film is stored or conveyed in a state where the gravure-printed images are being exposed arousing, therefore, a problem in that the printed images might be scratched.

Further, if the gravure-printed images and the ink-jet images are overlapped one upon the other, the images printed earlier become the underlying layer for the images that are subsequently formed. Depending on the surface conditions of the images printed earlier, therefore, the images might be blurred or might possess decreased adhesiveness.

It is, therefore, an object of the present invention to provide a printed film for containers, that enables images to be gravure-printed thereon as well as variable images to be ink-jet printed thereon in combination, making it possible to cope with the designs for many kinds of products in small lots that could not be done by only the printing system such as gravure printing other than the ink-jet printing, the printed images excellently reproducing image densities that could not be attained by the ink-jet printing only.

Another object of the present invention is to provide a method of producing a printed film maintaining good productivity without arousing the above-mentioned problem, the film being printed with images by the ink-jet printing as well as with images formed by other printing system.

A further object of the present invention is to provide a printed seamless can having images formed by the ink-jet printing as well as images formed by the printing method other than the ink-jet printing, such as by the gravure printing.

### Means for Solving the Problems:

According to the present invention, there is provided a printed film for containers, including a transparent film having ink-jet images printed thereon by ink-jet printing and other-printing images printed by a printing system other than the ink-jet printing, the ink-jet images being formed between a top coating and an underlying layer, and the other-printing images being formed between the underlying layer and an adhesive layer.

In the printed film for containers of the present invention, it is desired that:
1. The transparent film is interposed between the ink-jet images and the other-printing images, the ink-jet images and the top coating are formed on one surface of the transparent film via the underlying layer, and the other-printing images and the adhesive layer are formed on the other surface of the transparent film;
2. The other-printing images are printed between the transparent film and the underlying layer;
3. The other printing system is a gravure printing, and a layer is, further, solidly printed over the whole surface after the gravure printing; and
4. A coating material for forming the top coating, in its half-cured state, has adhesiveness to the adhesive layer.

According to the present invention, further, there is provided a printed seamless can having the printed film for containers that is stuck to at least the body portion thereof.

According to the present invention, further, there is provided a printed seamless can having ink-jet images and other-printing images on a transparent film provided on the outer surface of at least the body portion of the seamless can, the ink-jet images being printed between a top coating and an underlying layer, and the other-printing images being printed between the underlying layer and an adhesive layer.

According to the present invention, further, there is provided a method of producing a printed film for containers, comprising steps of:
printing other-printing images on one surface of a transparent film by a printing system other than ink-jet printing;
forming an adhesive layer on the other-printing images;
forming an underlying layer on the other surface of the transparent film on which the other-printing images;
ink-jet printing ink-jet images on the underlying layer; and
forming a top coating on at least the ink-jet images.

According to the present invention, further, there is provided a method of producing a printed film for containers, comprising the steps of:
printing other-printing images on one surface of a transparent film by a printing system other than ink-jet printing;
forming an underlying layer on the other surface of the transparent film on which the other-printing images;
ink-jet printing ink-jet images on the underlying layer;
forming a top coating on at least the ink-jet images; and forming an adhesive layer on the other-printing images.

### Effects of the Invention:

The printed film for containers of the present invention enables images to be printed thereon by gravure printing in combination with variable images printed thereon by ink-jet printing, making it possible to cope with the designs for many kinds of products in small lots that could not be done by the printing systems other than the ink-jet printing and, therefore, to form images excellently reproducing image densities that could not be attained by the ink-jet printing only.

By interposing a transparent film or an underlying layer or both of them between the ink-j et images and the images printed by the other printing method, it is made possible to provide a printed film forming vivid images thereon free of distortion or spread of dots that form the ink-jet images.

According to the first method of producing a printed film of the invention, further, the images formed by the other printing system such as gravure printing are positioned between the adhesive layer and the transparent film, and remain protected by these layers before the ink-jet printing is executed. It is, therefore, made possible to provide a film on which fixed images are printed in large quantity without permitting gravure-printed images to be damaged even if the film is taken-up, stored or delivered prior to executing the ink-jet printing, and without affected by the printing speed of the ink-jet printing yet maintaining excellent productivity.

Further, the coating material that forms the top coating, in its half-cured state, has adhesiveness to the adhesive layer. Therefore, when the printed film of the invention is stuck to a container while the top coating is in a half-cured state, the adhesive layer and the top coating can be firmly and closely adhered together over a portion on where the printed film is overlapped. Even if subjected to the retort-treatment, therefore, the printed film is effectively prevented from peeling off the portion on where it is overlapped.

In the invention, further, by sticking the printed film for contains onto the body portions of the seamless cans, it is made possible to provide the printed seamless cans meeting designs of various kinds of products in small lots and excellently reproducing image densities.

The printed seamless can is obtained by sticking the printed film of the invention formed as described above onto the container such as seamless can. The printed seamless can is, further, obtained by sticking, onto the body portion thereof, a precursor label comprising an intermediate film prepared through the steps of prior to executing the ink-jet sprinting in the above first production method, i.e., a precursor label having images printed on one surface of the transparent film printed by a printing system other than the ink-jet printing and having an adhesive layer formed on the printed images or a precursor label having an underlying layer formed on the other surface of the transparent film of the above printed label (the seamless can thus obtained is often simply called "precursor labelled can"). The precursor labelled can is, thereafter, subjected to the curved-surface printing or the curved-surface application to form the ink-jet images and the top coating thereon, making it possible to meet various kinds of designs in small lots and to meet various production steps.

The above-mentioned effects of the printed film for containers of the invention will also become obvious from the results of Examples described later.

Namely, the seamless cans (hereinafter often simply referred to as "labelled cans") have the printed film, the printed film bearing images printed by the ink-jet printing between the top coating and the underlying layer and, further, bearing images printed by the gravure printing between the underlying layer and the adhesive layer. The cans are free of distortion or spread of dots forming the ink-jet images and, further, effectively prevent the ink-jet images from being scratched (Examples 1 to 18). A labelled can having the printed film that has no top coating on the ink-jet images, on the other hand, obviously permits the ink-jet images to be scratched and, therefore, has poor scratch resistance (Comparative Example 1) . Further, in a labelled can having the printed film that has images printed directly on the transparent film by the ink-jet printing without forming the underlying layer, the dots are spread and the images have poor vividness (Comparative Example 2). Further, in labelled cans having the printed film that has images printed directly on the gravure-printed images without forming the underlying layer, the dots are distorted and the images have poor vividness (Comparative Examples 3 and 5). Further, if the ink-jet printing is executed after the cans are off-set printed and arranged in a pallet, the gravure-printed images are scratched during the palletization and, besides, the dots in the ink-jet images are distorted (Comparative Example 4).

### Brief Description of the Drawings:

[Fig. 1] is a view illustrating in cross section a structure of a printed film for containers of the present invention.
[Fig. 2] is a view illustrating in cross section another structure of the printed film for containers of the present invention.
[Fig. 3] is a view illustrating in cross section a further structure of the printed film for containers of the present invention.
[Fig. 4] is a view illustrating how to print images on the printed film of the present invention.
[Fig. 5] is a view illustrating how to form an adhesive layer on the printed film of the present invention.
[Fig. 6] is a view illustrating the step of ink-jet printing and the formation of top coating in a method of producing the printed film of the present invention.
[Fig. 7] is a view illustrating an arrangement of ink-jet heads in the step of ink-jet printing in the method of producing the printed film of the present invention.
[Fig. 8] is a view illustrating an arrangement of ink-jet heads in the step of ink-jet printing in the method of producing the printed film of the present invention.
[Fig. 9] is a view illustrating a step of ink-jet printing on a curved surface.
[Fig. 10] is a view illustrating a step of ink-jet printing on the curved surface.
[Fig. 11] is a view of a printed seamless can according to the present invention.

### Modes for Carrying Out the Invention

### (Printed film)

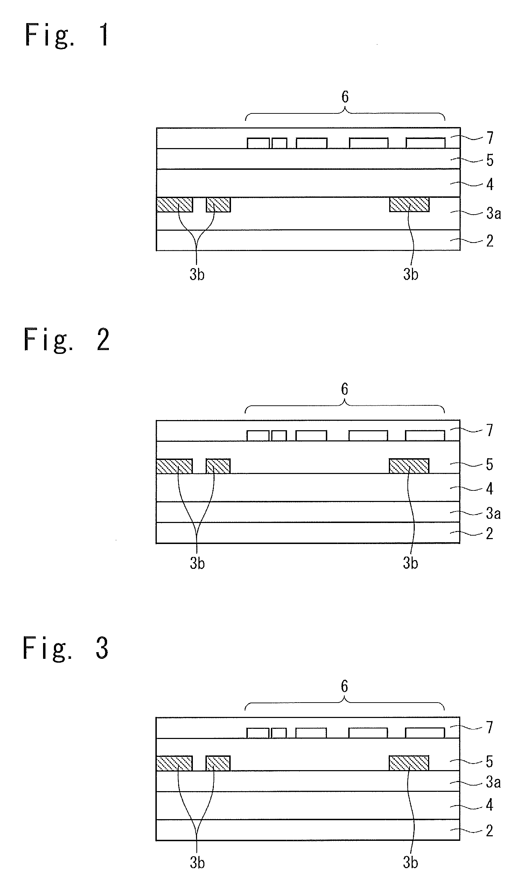

Fig. 1 is a view illustrating in cross section a structure of a printed film 1 of the present invention, including, from the side of the container (not shown), an adhesive layer 2, an image 3 (hereinafter often referred to simply as "otherwise printed image") comprised of a layer 3a solidly printed over the whole surface and a patterned layer 3b printed by means other than the ink-jet printing, a transparent film 4, an underlying layer 5, an ink-jet printed image 6 and a top coating 7.

In the invention, as shown in Fig. 1, the image 3 printed by the printing system other than the ink-jet printing is positioned via the ink-jet printed image 6, underlying layer 5 and transparent film 4. As described above, therefore, the otherwise printed image and the ink-jet printed image do not come into direct contact with each other; i.e. , ink-j et printed dots are not distorted or spread and, therefore, the image is allowed to be printed by ink-jet printing being overlapped thereon.

Here, in the invention, as shown in Fig. 1, it is most desired that the transparent film is present between the ink-jet printed image and the otherwise printed image, and that the image is ink-jet printed on the transparent film via the underlying layer from the standpoint of attaining the effect mentioned above. As shown in Figs. 2 and 3, however, the ink-jet printed image can be suppressed from blurring even by forming the underlying layer 5 on the otherwise printed image 3, and by ink-jet printing the image 6 on the underlying layer 5. Namely, Fig. 2 shows a structure of lamination in which the underlying layer 5 is formed on the patterned layer 3b that is formed on the transparent film 4, and the ink-jet printed image 6 and the top coating 7 are formed on the underlying layer 5. In the embodiment of Fig. 2, the layer 3a solidly printed on the whole surface is present between the transparent film 4 and the adhesive layer 2. In Fig. 3, further, the otherwise printed image 3 comprised of the layer 3a solidly printed on the whole surface and the patterned layer 3b is formed on the transparent film 4, the underlying layer 5 is formed on the otherwise printed image 3, and the ink-jet printed image 6 and the top coating 7 are formed on the underlying layer 5.

### [Transparent film]

The transparent film 4 used as the printing film of the invention may be formed by using a known transparent thermoplastic resin, for example, an olefin resin, such as low-density polyethylene, high-density polyethylene, polypropylene, poly 1-butene, poly 4-methyl-1-pentene, or random or block copolymer of α-olefins or cyclic olefin copolymer such as of ethylene, propylene, 1-butene or 4-methyl-1-pentene; an ethylene-vinyl copolymer resin, such as ethylene-vinyl acetate copolymer, ethylene-vinyl alcohol copolymer or ethylene-vinyl chloride copolymer; a styrene resin such as polystyrene, acrylonitrile·styrene copolymer, ABS, α -methylstyrene·styrene copolymer; a vinyl resin such as polyvinyl chloride, polyvinylidene chloride, vinyl chloride ·vinylidene chloride copolymer, methyl polyacrylate, or methyl polymethacrylate; an amide resin such as nylon 6, nylon 6-6, nylon 6-10, nylon 11, or nylon 12; a polyester resin such as polyethylene terephthalate, polybutylene terephthalate or polyethylene naphthalate; a polycarbonate; a polyphenylene oxide; or a biodegradable resin such as polylactic acid. Specifically, a polyethylene terephthalate is preferred.

Though there is no specific limitation, the transparent film has a thickness desirably in a range of 5 to 30 µm. Further, the transparent film may have been monoaxially or biaxially stretched and, specifically, biaxially stretched.

### [Otherwise printed images]

As the printing system other than the ink-jet printing, there can be exemplified conventional plate-type printings such as gravure printing, offset printing and flexo printing that are capable of printing images at high speeds and in large quantities. Among them, the gravure printing is specifically preferred. As shown in Fig. 1, further, the images can be printed by combining the patterned layer 3b formed by the gravure printing with the layer 3a solidly printed on the whole surface by the gravure printing or by the roll coating. By covering the metallic surface of the metal can with the layer solidly printed over the whole surface, the patterned layer becomes vivid and the printed images become highly decorative. Though there is no limitation on the color that is to be solidly printed on the whole surface, a white ink is, particularly preferably, solidly printed on the whole surface (hereinafter often referred to simply as "white layer solidly printed over the whole surface") from the standpoint of decoration. The patterned layer and the layer solidly printed on the whole surface may be formed adjacent to each other as shown in Fig. 1 or may be formed at separated positions as shown in Fig. 2. In Fig. 2, further, the position of the patterned layer 3b and the position of the layer 3a solidly printed on the whole surface may be replaced by each other.

### [Adhesive layer]

The adhesive layer 2 for sticking the printed film onto the container, according to the present invention, contains a known thermosetting adhesive that easily adheres to the outer surface of the container upon being heated and pressurized, such as the one that contains, for example, polyurethane-type or thermosetting polyester resin, polyester polyurethane resin, epoxy resin, phenol resin or alkyd resin as a heat-curable resin component, and contains isocyanate or melamine resin as a curing component in an amount of about 0.1 to 10 parts by weight per 100 parts by weight of the thermosetting resin component. To assure stability of before being cured, further, it is, usually, desired that the adhesive is blended with a low molecular compound such as oxime, lactam, ester, ketone or amide in a suitable amount so that the functional groups such as isocyanate groups are blocked.

The adhesive layer is formed by preparing an adhesive solution by dispersing or dissolving the thermosetting adhesive in any of various solvents, and applying the adhesive solution by using a roll followed by drying. It is desired that the adhesive layer has a thickness which is, usually, in a range of 1 to 10 *µ*m.

As the adhesive layer, further, there can be used a known thermoplastic resin such as hot-melt resin composition or heat-sealable resin in addition to using the above thermosetting adhesive.

The hot-melt composition can be blended with other components such as oil component like fluidized paraffin; wax components like hydrocarbon wax; hydrogenated rubber like ethylene propylene rubber; polymer components like amorphous polyolefin or hydrogenated petroleum resin; and antioxidant. By suitably selecting the kinds and amounts of these components, it is allowed to adjust the melting point, viscosity and adhering strength of the hot-melt resin composition.

As the heat-sealable resin, there can be used low-, intermediate- or high-density polyethylene (PET), linear low-density polyethylene (LLDPE), linear ultra-low-density polyethylene (LULDPE), isotactic polypropylene (PP), propylene-ethylene copolymer, ethylene-vinyl acetate copolymer, ethylene-acrylic acid copolymer, ethylene-methyl methacrylate copolymer, ionically crosslinked olefin copolymer (ionomer), and modified olefin resin such as olefin resin graft-modified with ethylenically unsaturated carboxylic acid or an anhydride thereof; polyamide or copolyamide resin having a relatively low melting point or a low softening point; and polyester or copolyester resin having a relatively low melting point or a low softening point, in one kind or in two or more kinds in combination.

If the layer 3a is not solidly printed on the whole surface of the otherwise printed image 3, the adhesive layer may be blended with a pigment such as titanium oxide. Being blended with the pigment, further, the adhesive layer can be effectively prevented from undergoing the thermal shrinkage when the printed film is wound round the container and is stuck thereto by being heated. Therefore, the printed images are effectively prevented from being distorted by the thermal shrinkage. The amount of the pigment in the adhesive layer is, desirably, 10 to 90% by weight.

### [Underlying layer]

In the printed film of the invention, the underlying layer 5 on which the images are ink-jet printed is also called anchor coating, and works to firmly hold and fix the ink-jet images, to increase close adhesion and to decrease distortion or spread of ink-jet dots.

The underlying layer can be formed by using a material that has been known per se. as a transparent anchor coating agent for ink-jet printing. For instance, a coating solution is obtained by dispersing or dissolving, in a predetermined solvent, a polyester resin of the heat-curing type, ultraviolet ray-curing type or electron ray-curing type, a heat-curing acrylic resin, an epoxy resin or a polyurethane resin. The coating solution is then applied, dried, and is cured by heating, by the irradiation with ultraviolet rays or with electron rays. The underlying layer, usually, has a thickness in a range of, desirably, 0.1 to 5.0 *µ*m.

Here, as shown in Fig. 1, the underlying layer is, particularly preferably, formed on the transparent film but can also be formed directly on the otherwise printed images.

It is necessary that the underlying layer is formed at least on a position where the images are to be ink-jet printed but may be so formed as to cover the whole surface of the printing film, as a matter of course. The underlying layer can be formed by the roll coating, the gravure printing, as well as by the ink-jet printing.

### [Ink-jet images]

The image 6 can be ink-jet printed on the underlying layer 5 in a predetermined design depending on the ink-jet system. Namely, the image 6 can be formed on a portion where there is no otherwise printed image or where there is the otherwise printed image, the color of which being overlapped thereon.

As the ink for the ink-jet printing, there can be used an ink of the type that can be cured by heating and drying, an ink of the ultraviolet ray-curing type or an ink of the electron ray-curing type that has heretofore been used for being ink-jet printed on the metal cans. Here, the ink of the type that can be cured by heating and drying is preferably used from the standpoint of inexpensive facility cost for the curing. The ink of the type that can be cured by heating and drying includes those of the aqueous type, oil type and solvent type. The ink of the solvent type, however, is preferred since it cures in short periods of time.

Further, from such a standpoint that the ink readily assumes the cured state or half-cured state and is not blurred after it is driven out and has landed the layer, it is desired to use the ink of the ultraviolet ray-curing type or the ink of the electron ray-curing type. As the ink of the ultraviolet ray-curing type or the ink of the electron ray-curing type, there is used an oil-soluble ink for ink-jet printing obtained by dispersing or dissolving, in a solvent, pigments or dyes of various colors and a resin binder of the ultraviolet ray-curing type or a resin binder of the electron ray-curing type together with various additives. In the case of the ink of the ultraviolet ray-curing type, a photopolymerization initiator is, further, added thereto.

### [Top coating]

The top coating 7 is also called finishing varnish layer, and is formed for protecting and lustering the ink-jet images.

As the top coating agent (finishing varnish) for forming the top coating, there is preferably used a transparent thermosetting resin which contains, for example, a thermosetting polyester resin, an acrylic resin or an epoxy resin as a thermosetting resin component and, further, contains an amino resin such as phenol resin or melamine resin, or isocyanate resin as a curing component in an amount of about 0.1 to 10 parts by weight per 100 parts by weight of the thermosetting resin component. These resin components are suitably dissolved in an organic solvent.

The top coating agent can be blended with lubricating components such as paraffin, silicone oil, etc.

### [Other layers]

It is important that the printed film of the present invention includes at least the above-mentioned adhesive layer, otherwise printed images, transparent film, underlying layer, ink-jet images, and top coating. The printed film, however, may contain any other layers, as a matter of course.

The printed film can include, for example, a luster layer containing metal powder pigment or pearl pigment, a deposited layer, a metal foil and a hologram layer between the adhesive layer and the otherwise printed images to thereby enhance metallic luster or brilliancy and decorative appeal.

### (Method of producing the printed film)

In the method of producing the printed film of the invention, the layers may be laminated in any order on the transparent film that is the base film so far as it is satisfied that the otherwise printed images and the underlying layer are formed prior to ink-jet printing the images, that the images are ink-jet printed on the underlying layer and that the underlying layer is so formed as to be positioned at least between the otherwise printed images and the ink-jet images.

In forming the laminated structure of the printed film of the invention shown in Fig. 1, it is particularly desired that the steps are executed in order of (A) forming otherwise printed images on the transparent film, (B) forming the adhesive layer on the otherwise printed images, (C) forming the underlying layer on the other surface of the transparent film on which the otherwise formed images have been formed, (D) ink-jet printing the images on the underlying layer, and (E) forming the top coating on the ink-jet images, or in order of (A) → (C) → (D) → (E) → (B).

In the method of producing the printed film of the invention, the above-mentioned series of steps (A) to (E) can be continuously executed. It is, however, also allowable to once take up the laminated film and store it after the above steps (A) and (B) are finished, or after the above steps (A), (B) and (C) are finished, or after the above steps (A) and (C) are finished but before executing the step (D) of ink-jet printing the images. The starting film in a state of prior to ink-jet printing the images is produced at a high speed in a large quantity and is stored. The starting film can then be subjected to the ink-jet printing to print desired images individually to thereby efficiently produce many kinds of printed films in small lots.

### [Step (A) of forming otherwise printed images]

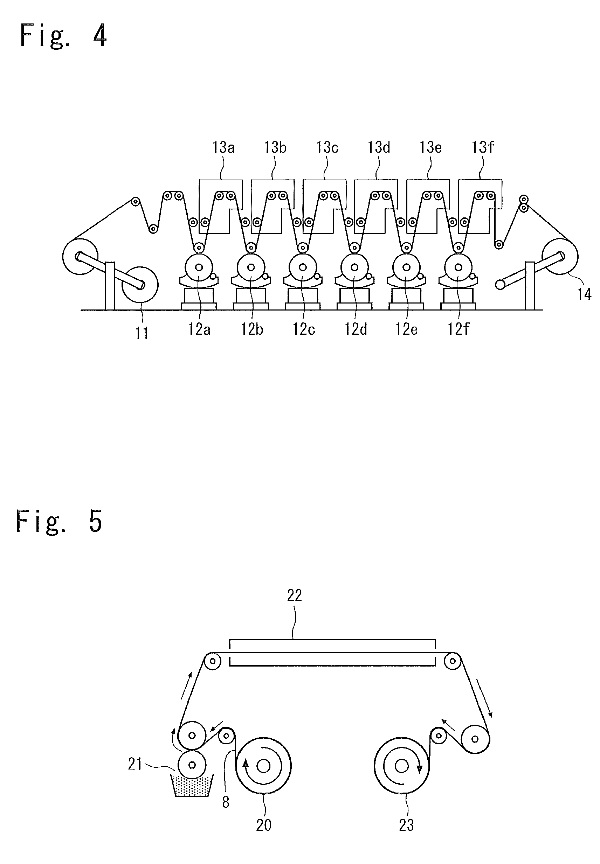

Fig. 4 is a view illustrating a step of gravure printing of when the gravure printing is employed as the other printing system. A transparent film 4 delivered from a delivery roll 11 is printed by a printing apparatus that has gravure rolls 12a, 12b, 12c, 12d, 12e and 12f corresponding to the inks of colors of yellow (Y), magenta (M), cyan (C), black (K), special color (S) and white (W), as well as ovens 13a, 13b, 13c, 13d, 13e and 13f from the upstream side. The transparent film is then taken up by a take-up roll 14.

### [Step (B) of forming the adhesive layer and step (C) of forming the underlying layer]

Fig. 5 is a view illustrating a step of forming the adhesive layer. A starting film 8 comprising the transparent film 4, on which otherwise printed images 3 are formed, is delivered from a delivery roll 20, applied with an adhesive by a coater 21, and is caused to pass through a drying furnace 22. The starting film 8 comprising the transparent film 4, on which the otherwise printed images 3 and the adhesive layer 2 are formed, is then taken up by a take-up roll 23.

If the starting film is to be provided with the underlying layer, the anchor coating agent is applied thereto and is dried by using the same apparatus as the one shown in Fig. 5 to thereby form the underlying layer. As described above, there is no limitation on the order of forming the adhesive layer and the underlying layer. It is, however, desired that the adhesive layer is formed later from the standpoint of preventing the blocking of the starting film at the time when it is being taken up.

### [Step (D) of ink-jet printing images and step (E) of forming the top coating]

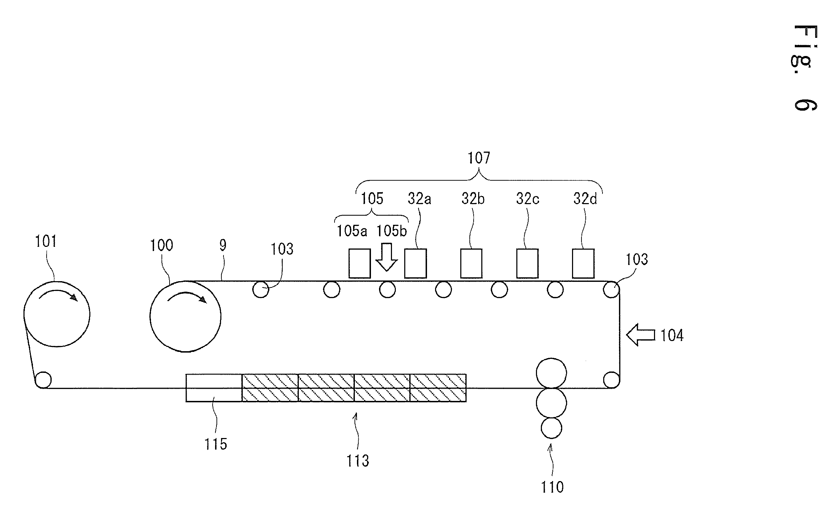

Fig. 6 is a view illustrating the steps of ink-j et printing images and forming the top coating on the starting film. Here, the provision is made of a delivery roll 100 for delivering the starting film 9 and a take-up roll 101 for taking up the starting film 9 from the delivery roll 100. In a film transfer region between the delivery roll 100 and the take-up roll 101, there are provided a mechanism for forming the images by the ink-jet printing and a mechanism for forming the top coating. Through these mechanisms, the images 6 are ink-jet printed and the top coating 7 is formed on the underlying layer 5 of the starting film 9.

In a film transfer passage between the delivery roll 100 and the take-up roll 101, there are provided feed rolls 103 maintaining a suitable distance. The starting film 9 delivered from the delivery roll 100 is transferred via the feed rolls 103, and is taken up by the take-up roll 101. In the film transfer passage of from the delivery roll 100 to the take-up roll 101, there are arranged ink-jet printers 107, a curing apparatus 104 based on the irradiation with electron rays or ultraviolet rays or based on a hot-air drier, a top coating agent applicator 110, a heating apparatus 113 and a cooling apparatus 115 in this order from the side of the delivery roll 100.

If the starting film has no underlying layer, then the underlying layer is formed prior to ink-jet printing the images. The underlying layer can, similarly, be formed by using the above-mentioned apparatus shown in Fig. 5. It is, however, also allowable to form the underlying layer by the ink-jet printing. In this case, in the step of ink-jet printing as shown in Fig. 6, provision is made of an underlying layer-forming apparatus 105 that includes an anchor coat applicator 105a and a false-curing apparatus 105b on the upstream of the ink-jet printing. After the top coating agent is applied, the underlying layer is cured together with the ink-jet images and the top coating by the heating apparatus 113.

The starting film 9 delivered from the delivery roll 100 is, first, subjected to the ink-jet printing by an ink-jet printer 107 where images 6 are ink-jet printed on the surface of the underlying layer 5.

The ink-jet printer 107 includes ink-jet heads 32a, 32b, 32c and 32d corresponding to the inks of colors of yellow (Y), magenta (M), cyan (C) and black (K) in this order from the upstream toward the downstream of the passage of transferring the starting film 9. The yellow, magenta, cyan and black inks are printed based on predetermined image data, whereby the images 6 of each of these colors or full colors of the overlapping of these colors are ink-jet printed. There is no particular limitation on the order of arranging the heads. However, if no white layer has been solidly formed on the whole surface of the starting film, it is desired that the white layer is solidly formed on the whole surface by the ink-jet printing by using the white ink so that the ink-jet images will appear vividly. In this case, it is desired that the head W for white ink is arranged on the most upstream side, and a curing apparatus for half-curing is arranged before the head for the ink of the next color (head 32a in Fig. 6).

The above arrangement permits the head 32d for black ink to print bar code images on the white layer solidly printed on the whole surface so that the bar code can be displayed.

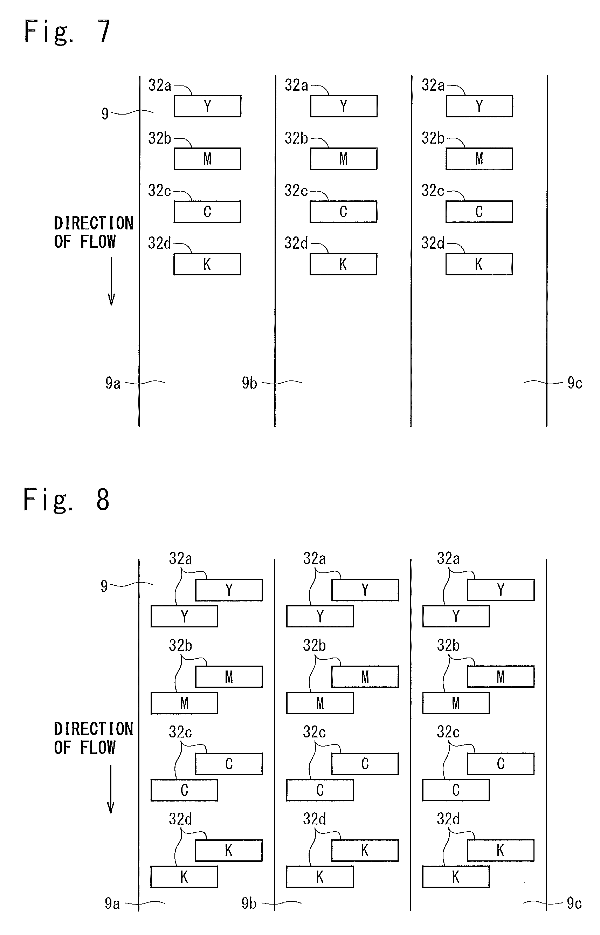

Fig. 7 is a schematic view of when the ink-jet printer 107 of Fig. 6 is viewed from the upper side.

Referring to Fig. 7, it is now attempted to print the same images on the starting films 9 in three rows 9a, 9b and 9c in parallel in a direction in which the starting films 9 flow. Namely, ink-jet heads 32a, 32b, 32c and 32d corresponding to the inks of colors of yellow (Y), magenta (M), cyan (C) and black (K) are arranged for each row in this order from the upstream in the direction in which the starting films 9 flow, and liquid droplets of the inks are successively injected to ink-jet print the images on the underlying layers 5 of the starting films 9. The ink-jet heads of the above colors are not limited to only the arrangement shown in Fig. 7 but can be arranged in any order.

Fig. 8 shows the arrangement of the ink-jet heads of another embodiment in which the ink-jet heads 32a, 32b, 32c and 32d corresponding to the inks of colors of yellow (Y), magenta (M), cyan (C) and black (K) are, respectively, arranged in pairs. This makes it possible to broaden the range of printing by the ink-jet printing or to quicken the speed of printing.

After the images 6 are ink-j et printed as described above, the inks are cured by the curing apparatus 104 such as electron-ray irradiation apparatus, ultraviolet-ray irradiation apparatus like ultraviolet-ray irradiation lamp or a hot air drying apparatus, whereby the ink-jet images are fixed to the surfaces of the underlying layers 5.

After the ink-jet images 6 are fixed onto the surfaces of the underlying layers 5, a coating solution containing the top coating agent is applied by an application apparatus 110 so as to completely cover at least the ink-jet images. The application apparatus 110, usually, comprises a gravure roll or a coater as shown in Fig. 6 but may also rely upon the ink-jet printing.

The top coating may be formed all over the surfaces of the printed label or may be formed on only the portions on where the images are ink-jet printed.

After having been applied, the coating solution of the top coating agent is heated by the heating apparatus 113 so as to be cured or half-cured. The top coating 7 is, thereafter, cooled by the cooling apparatus 115. The thus printed film of the present invention is then taken up by the take-up roll 101.

Depending on the top coating agent, the heating apparatus 113 cures or half-cures the top coating by, for example, blowing the hot air using the heating oven or by irradiating electron rays or ultraviolet rays. Here, however, it is important that the adhesive layer is not cured if it has been formed in advance.

The cooling apparatus 115 is of a structure that blows the cold air. It is desired that the cooling apparatus 115 is arranged neighboring the heating apparatus 113 as shown in Fig. 6. Therefore, the top coating that is heated and is maintained in the cured or half-cured state is readily cooled and is reliably prevented from being cured by excess of heating.

If the printed film of the invention is used as the printed label that is to be stuck to the metal cans, it is desired that the top coating is in the half-cured state. Due to this, the adhesive layer adheres to the surface of the body portion of the metal can due to the heat at the time of sticking the printed label and at the same time, the adhesive layer and the top coating are firmly joined together at the portions where they are overlapped one upon the other, making it possible to effectively prevent peeling of the printed label from overlapped portion.

In the above-mentioned production method of the present invention, it is allowable to install, for example, a corona device on a suitable region to execute a treatment with corona in order to form various kinds of layers thereon. For instance, upon corona-treating the surface of the transparent film, it is allowed to enhance close adhesion between the underlying layer formed on the surface thereof and otherwise printed images. Further, upon corona-treating the surface of the underlying layer, it is allowed to enhance close adhesion between the underlying layer and the ink-jet images. It is allowable to corona-treat the surfaces of other layers, as a matter of course.

### (Containers stuck with the printed film)

The printed film of the present invention can be used for a variety of packing containers such as metal cans, pouches, cups, plastic bottles and the like. Specifically, the printed film can be used as a printed label for the metal cans.

The metal cans may be, either, the seamless cans or the welded cans. Preferably, however, the metal cans are the seamless cans. To produce the seamless cans, various surface-treated steel sheets such as tin-free steel (TFS) and the like, various steel sheets plated with tin or the like, light metal sheets such as of aluminum, inorganic surface-treated light metal sheets conversion-treated with chromium phosphate, organic/inorganic surface-treated light metal sheets treated with inorganic and organic compounds, or resin-coated metal sheets comprising the above metal sheets coated with a thermoplastic resin such as polyester resin, are subjected to a conventional working such as draw· redraw working, bend-elongation working (stretch working) based on drawn· redraw working, bend-elongation by draw· redraw· ironing working, draw ·ironing working, or impact working of light metal sheets.

White coating may have been formed on the outer surface of the metal cans. In this case, the color inherent in the metal sheet can be concealed and, therefore, there is no need of solidly printing a layer on the whole surface.

The printed film of the invention is used as the printed label for hollow containers such as metal cans, cups, plastic bottles and the like. Namely, a long printed film is cut into a suitable size to meet the size of the body portion of the container, is wound round the body portion of the container and is stuck thereto by heating.

It is, further, allowable to wound the printed film (printed label) round the container, and adhere only the ends of the printed film so as to be fixed to the container. In this case, it is desired to use the above-mentioned hot-melt resin composition at the ends of the printed film.

If used for the pouch, a heat-sealable layer such as of polyethylene resin is formed on the adhesive layer of the long printed film. Thereafter, the long printed film is partly heat-sealed and is cut to form the pouch. Or the printed label may be cut into a suitable size to meet the size of the pouch that has been formed, and may be stuck to the pouch. Further, the long printed film may be stuck to a laminate that is to be used for forming the pouch and, thereafter, the pouch may be formed.

Moreover, the adhesive layer itself may be made of the heat-sealable resin. Thereafter, the pouch may be formed by using only the printed film of the present invention with the adhesive layer comprising the heat-sealable resin as the innermost layer.

### (Production of the printed seamless cans by ink-jet printing images on the curved surfaces)

### [Step of preparing precursor labelled cans]

In producing the printed seamless can of the present invention, the starting film comprising the transparent film on which otherwise printed images and adhesive layer are formed or on which the underlying layer is, further, formed, is cut into a size of the seamless can to thereby obtain a precursor label. The precursor label is then wound round the body portion of the seamless can and to which a predetermined temperature and pressure are applied so that the adhesive layer is cured by heating and that the precursor label is stuck to the seamless can. The precursor labelled can is thus obtained.

### [Step of ink-jet printing]

Images are ink-jet printed onto the precursor labelled can by employing a printing system that has so far been used for printing images onto the known metal cans.

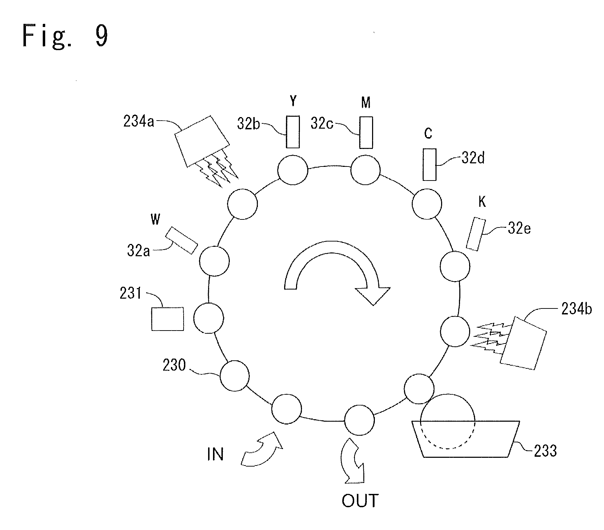

The ink-jet printing is executed as illustrated in Fig. 9. The precursor labelled can is fitted to a mandrel 230 and is transferred to the step of ink-jet printing. Namely, the precursor labelled can passes through the step 231 of adjusting the position of the labelled can by detecting a pattern of the precursor labelled can. Next, ink droplets are successively injected from the ink-jet heads 32a, 32b, 32c, 32d and 32e corresponding to the inks of colors of white (W), yellow (Y), magenta (M), cyan (C) and black (K), and images are thus ink-jet printed on the precursor labelled can fitted to the mandrel 230. Arrangement of the ink-jet heads of the above colors is not limited to only the example shown in Fig. 9, and any other arrangements may be employed.

In the ink-jet printing, it is desired that the inks are false-cured before being completely cured at the time of curing the top coat agent (finishing varnish) by heating. This makes it possible to form sharp images without permitting the inks to be spread or blurred. The timing for false curing can be suitably set depending on the desired images and on the kinds of inks used for the ink-jet printing. From the standpoint of economy, however, if the white ink is to be solidly ink-jet printed on the whole surface, it is desired that the inks are false-cured in the false-curing step 234a of after the white ink is solidly ink-jet printed on the whole surface and in the false-curing step 234b after the inks of all colors are printed but before the step 233 of applying the top coating agent (finishing varnish), as shown in Fig. 9.

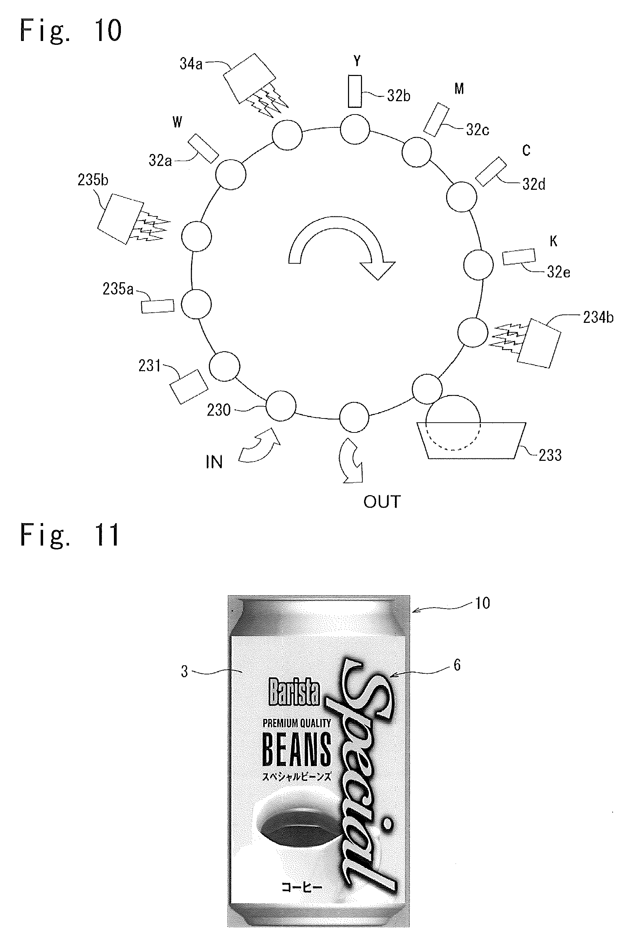

If no underlying layer has been formed on the precursor label, the underlying layer is formed prior to executing the ink-jet printing. The underlying layer can be formed in the same manner as when the underlying layer is formed on the precursor label except when it is to be printed on a curved surface. The underlying layer, however, can also be formed by being ink-jet printed. In this case, as shown in Fig. 10, however, in the step of ink-jet printing, provision is made of the underlying layer-forming step 235 that comprises ink-jet printing 235a with the ink for forming the underlying layer and false-curing 235b on the upstream of the ink-jet printing the images. Then, as will be described later, after the top coating agent (finishing varnish) is applied, the inks are completely cured simultaneously with the curing of the ink-jet images and the top coat agent (finishing varnish).

### [Step of forming the top coating]

In the method of producing the printed seamless can of the present invention, after the images have been ink-jet printed thereon, as shown in Figs. 9 and 10, the top coating agent (finishing varnish) is applied thereon and is cured by heating or by the irradiation with ultraviolet rays or electron rays depending on the kind of the top coating agent (finishing varnish) to thereby form the printed seamless can 10 on which the top coating is formed.

The top coating agent is applied onto the curved surfaces, usually, by using a coater. The top coating agent, however, can also be formed by the ink-jet printing.

After the top coating agent has been applied, if the ink-jet images have only been false-cured, then the ink-jet images are completely cured simultaneously with the curing of the top coating agent to thereby form the printed seamless can.

Fig. 11 is a view showing a printed seamless can to which the printed film of the present invention is stuck. The printed seamless can 10 has an image 3 of a fixed design that is, for example, gravure-printed and an image 6 of a variable design that is ink-jet printed in combination.

In the printed seamless can of the present invention, the otherwise printed image and the ink-jet printed image are separately formed via at least the underlying layer and, preferably, via the transparent film and the underlying layer, and do not come into direct contact with each other. Therefore, the images can be ink-jet printed in designs that are not overlapped one upon the other and can, further, be ink-jet printed on the images printed by the other method, too.

### EXAMPLES

### <Example 1>

### <Preparation of the printed film>

A transparent biaxially stretched polyethylene terephthalate film (PET film) of a thickness of 12 *µ*m was delivered, corona-treated on one surface (on the side of the can body) thereof in a customary manner, and on which (on the corona-treated side) the image (otherwise printed image) of a fixed design 3 shown in Fig. 11 was gravure-printed using inks of colors of yellow (Y), magenta (M), cyan (C), black (K) and special color (S) followed by false-curing each color with the hot air.

Next, in the final step in the gravure-printing apparatus, a white layer (solidly printed layer) was solidly printed on the whole surface using the white (W) ink on the image followed by curing with the hot air, and the film was taken up. The fixed design was provided, at a can wrap-seamed portion, with a square mark for determining the position with respect to the ink-jet printed (hereinafter often referred to as "IJP") image. The film was so arranged that three rows of labels were arranged in the direction of width.

Next, by using the apparatus shown in Fig. 5, the film was delivered, a polyester type thermosetting resin was applied onto the surface of the film on the side opposite to the white solidly printed layer followed by curing in the drying furnace to thereby form the underlying layer. The film was then taken up.

Next, the film was delivered by using the apparatus shown in Figs. 6 and 7, and images were printed on the underlying layer by the ink-jet heads in colors in order of yellow (Y), magenta (M), cyan (C) and black (K) followed by curing to thereby ink-jet print the image of a variable design 6 shown in Fig. 11. Next, the epoxy resin was applied as the top coating agent by using rolls and was half-cured by the hot-air heating apparatus to form the top coating, and the film was taken up. The top coating was half-cured so as to maintain the half-cured state even after the adhesive layer was formed by the next step.

Next, the film was delivered by using the apparatus shown in Fig. 5. By using the coater, the polyester type thermosetting resin was applied onto the white layer solidly printed on the whole surface and was cured by the drying furnace to form the adhesive layer. The film was then taken up; i.e., the printed film was thus prepared.

### <Production of seamless cups>

A biaxially stretched polyethylene terephthalate/isophthalate copolymer film of a thickness of 20 *µ*m was heat-adhered onto a tin-free steel sheet (coated on the surfaces thereof with metal chromium in an amount of 120 mg/m² and with a chromium oxide in an amount of 15 mg/m²) having a thickness of 0.24 mm and a tempering degree of T3-CA on the side that becomes the inner surface of the can. At the same time, a biaxially stretched polyethylene terephthalate/isophthalate copolymer film containing 20% by weight of titanium oxide and having a thickness of 15 *µ*m was heat-adhered onto the same tin-free steel sheet on the side that becomes the outer surface of the can both at a melting point of the film readily followed by cooling with water to thereby obtain a resin-coated metal sheet.

The resin-coated metal sheet, after a glamour wax has been uniformly applied thereto, was punched into a disc of a diameter of 143 mm. The disc was draw-worked and was then stretch-draw worked into a shape of a diameter of 52 mm and a height of 112 mm, further, followed by doming and heat treatment at 215°C for one minute to remove distortion due to the working from the film and to volatilize the lubricating agent. Next, the end of the opening was cut to obtain a seamless cup of a height of 106 mm.

### <Production and storage of the printed seamless cans>

The printed film prepared above was delivered, cut into three strips in the direction of width thereof, and was taken up, each strip of film having a width equal to the height of the can body portion.

Next, the strip of film was delivered, cut into a size of a width equal to the height of the can body portion and a length equal to the circumference of the can body portion plus 5 mm of overlapping portions. The film was wound round the outer surface of the seamless cup heated at 160°C while applying a pressure. The overlapping portions were adhered together, and a printed seamless can was produced. There were continuously produced 3,000 printed seamless cans.

The thus produced printed seamless cans were conveyed by a chute, packed by a palletizer into single-step pallets each holding 400 cans. Eight pallets were stacked one upon the other with a separator sheet placed among them, and were stored.

The printed seamless cans were taken out from the pallets, and were subjected to the necking and flanging on the side of the opening to obtain the printed seamless cans (labelled cans) having a nominal 202 can body diameter, an opening of 200 diameter and a capacity of 200 ml. The cans were evaluated for their items as described below. Table 1 shows the details of the printed films and the evaluated results.

### <Evaluation of scratch resistance>

The labelled cans obtained in Examples 1 to 7 and Comparative Examples 1 to 3 were visually inspected, each group in a number of 10, for their outer surfaces and were evaluated for their scratch resistance of the printed surfaces. The cans were evaluated to be (○) if they had no scratch, (Δ) if they had scratch to a slight degree, and (×) if any of them had scratch to an obvious degree. The products evaluated to be ○ and Δ were regarded to be acceptable.

### <Evaluation of vividness of images>

By using an optical microscope, the labelled cans obtained in Examples 1 to 7 and Comparative Examples 1 to 3 were inspected, each group in a number of 3, for their outer surfaces and were observed for their state of ink-jetted dots on the portions where the images were overlapped to evaluate vividness of images. The images were evaluated to be (○) if the ink-jetted dots were round and (X) if the dots were distorted or spread broad.

### <Example 2>

Labelled cans were produced and evaluated in the same manner as in Example 1 but having no white layer solidly printed on the whole surface. The evaluated results were as shown in Table 1.

### <Example 3>

Labelled cans were produced and evaluated in the same manner as in Example 1 but applying, by using a gravure-printing plate, the underlying layer on only the portion corresponding to the ink-jet printed image on the printed film. The evaluated results were as shown in Table 1.

### <Example 4>

Labelled cans were produced and evaluated in the same manner as in Example 1 but forming the underlying layer on the whole surface of the printed film by using the ink-jet heads of the underlying layer-forming apparatus shown in Fig. 6. The evaluated results were as shown in Table 1. In the following Examples, too, the underlying layer was formed by the ink-jet heads by using the polyester resin.

### <Example 5>

Labelled cans were produced and evaluated in the same manner as in Example 4 but applying the underlying layer on only the portion corresponding to the ink-jet printed image on the printed film. The evaluated results were as shown in Table 1.

### <Example 6>

The transparent film was provided with gravure-printed images and was taken up. By using the coater of Fig. 5, a white layer was solidly printed over the whole surface of the transparent film on the surface opposite to the gravure-printed images followed by curing, and the film was taken up. Next, the film was delivered and the underlying layer was formed on the gravure-printed images. The film was then taken up. Thereafter, a printed film was prepared in the same manner as in Example 1, and labelled cans were produced and evaluated in the same manner as in Example 1. The evaluated results were as shown in Table 1.

### <Example 7>

The transparent film was provided with the white solidly printed layer on the whole surface thereof by using the apparatus of Fig. 5 followed by curing, and the film was taken up. The film was delivered and images were gravure-printed on the white solidly printed layer followed by curing, and was taken up. The film was delivered and the underlying layer was formed on the gravure-printed images followed by curing, and was taken up. Thereafter, a printed film was prepared in the same manner as in Example 1, and labelled cans were produced and evaluated in the same manner as in Example 1. The evaluated results were as shown in Table 1.

### <Comparative Example 1>

A printed film was prepared in the same manner as in Example 1 but without forming the top coating, and labelled cans were produced and evaluated. The evaluated results were as shown in Table 1. Scratches were seen much in the ink-j et images and, therefore, the scratch resistance was poor.

### <Comparative Example 2>

A printed film was prepared in the same manner as in Example 1 but without forming the underlying layer, and labelled cans were produced and evaluated. The evaluated results were as shown in Table 1. Dots spread much in the ink-jet images and, therefore, vividness of images was poor.

### <Comparative Example 3>

A printed film was prepared in the same manner as in Example 7 but without forming the underlying layer, and labelled cans were produced and evaluated. The evaluated results were as shown in Table 1. Dots were not round but were distorted in the ink-jet images and, therefore, vividness of images was poor.

**Table 1**

| | Printed film | | | | | | | Evaluation | |
|---|---|---|---|---|---|---|---|---|---|
| | Top coat | IJP image | Underlying layer | Transparent film | Gravure image | White solidly layer | Adhesive layer | Scratch resistance | Vividness of image |
| Ex. 1 | ○ | ○ | ○ (*1) | ○ | ○ | ○ | ○ | ○ | ○ |
| Ex. 2 | ○ | ○ | ○ (*1) | ○ | ○ | × | ○ | ○ | ○ |
| Ex. 3 | ○ | ○ | ○ (*2) | ○ | ○ | ○ | ○ | ○ | ○ |
| Ex. 4 | ○ | ○ | ○ (*3) | ○ | ○ | ○ | ○ | ○ | ○ |
| Ex. 5 | ○ | ○ | ○ (*4) | ○ | ○ | ○ | ○ | ○ | ○ |
| Ex. 6 | ○ | ○ | ○ (*1) | *5 | | ○ | ○ | ○ | ○ |
| Ex. 7 | ○ | ○ | ○ (*1) | *6 | | | ○ | ○ | ○ |
| Comp. Ex. 1 | × | ○ | ○ (*1) | ○ | ○ | ○ | ○ | × | ○ |
| Comp. Ex. 2 | ○ | ○ | × | ○ | ○ | ○ | ○ | ○ | × (*7) |
| Comp. Ex. 3 | ○ | ○ | × | *6 | | | ○ | ○ | × (*8) |

| | | | | | | | | | |
|---|---|---|---|---|---|---|---|---|---|
| *1: all over, *2: coated partly, *3: all over IJP, *4: coated partly IJP, *5: in order of gravure image/transparent film, *6: in order of gravure image/white solidly layer/transparent film, *7: dots spread, *8: dots distorted | | | | | | | | | |

### <Example 8>

### <Preparation of the precursor label>

A transparent biaxially stretched polyethylene terephthalate film (PET film) of a thickness of 12 *µ*m was delivered, corona-treated on one surface (on the side of the can body) thereof in a customary manner, and on which (on the corona-treated side) the layer of a fixed design 3 shown in Fig. 11 was gravure-printed using inks of colors of white (W), yellow (Y), magenta (M), cyan (C) and black (K) each in a thickness of 2 *µ*m followed by false-curing each color with the hot air. Next, the white layer was solidly formed on the whole surface of the printed layer followed by curing with the hot air, and the film was taken up. The fixed design was provided, at a can wrap-seamed portion, with a square mark for determining the position with respect to the ink-jet printed (hereinafter often referred to as "IJP") image. The films were arranged in four rows such that the labels for four cans could be arranged in the direction of width.

Next, the film was delivered and by using the coater, an epoxy type thermosetting resin was applied onto the film on the surface opposite to the gravure-printed surface, and was dried in the drying furnace to form the underlying layer. The resulting film was taken up.

Next, the film was delivered and a polyester type thermosetting resin was applied onto the white solidly printed layer, and was cured in the drying furnace to form an adhesive layer. The film was taken up and a precursor label was prepared.

### <Production and storage of precursor labelled cans>

The precursor label prepared above was delivered, cut into four strips in the direction of length thereof, and was taken up, each strip of film having a width equal to the height of the can body portion.

Next, the strip of film was delivered, cut into a size of a width equal to the height of the can body portion and a length equal to the circumference of the can body portion plus 5 mm of overlapping portions. The film was wound round the outer surface of the seamless cup heated at 160°C while applying a pressure. The overlapping portions were adhered together, and a precursor labelled can was produced. There were continuously produced 3,000 precursor labelled cans. The thus produced precursor labelled cans were conveyed by the chute, packed by the palletizer into one-step pellets each holding 400 cans. Eight pallets were stacked one upon the other with a separator sheet placed among them, and were stored.

### <Production of the cans having a label ink-jet printed on the curved surface>

The precursor labelled cans were taken out from the pallets, and to which images were ink-jet printed and the top coating agent (finishing varnish) was applied on the curved surface by using the apparatus shown in Fig. 9.

The precursor labelled cans were inserted in the mandrels of the apparatus and were fixed thereto by vacuum from inside of the mandrels. Accompanying the intermittent turn of the apparatus, the image to be printed on the label was positioned with respect to the image to be ink-j et printed by using a camera, the image was ink-jet printed and false-cured, and the top coating agent (finishing varnish) was applied followed by heating and curing in the oven. The inks to be ink-jet printed were the solvent type inks that could be dried and cured with heat. Fig. 9 shows the timing of false-curing in the ink-jet printing. The design was a variable design shown in Fig. 11. Thereafter, the cans on the opening side were subjected to the necking and flanging to obtain the printed seamless cans (ink-jet print labelled cans) having a nominal 202 can body diameter, an opening of 200 diameter and a capacity of 200 ml.

The positioning with respect to the image on the label was attained by detecting the positioning mark using the camera and by turning the mandrel in a manner that the gravure-printed mage was in agreement with the ink-jet printed image.

To ink-jet print the images, dots were ink-jet printed in order of white (W), yellow (Y), magenta (M), cyan (C) and black (K). Thereafter, the inks were collectively false-cured with the hot air heated at 100°C and, after the finishing varnish was applied thereto, were completely cured in the oven at 200°C for one minute. The inks to be ink-jet printed were the solvent type inks that could be dried and cured with heat. The top coating agent (finishing varnish) was a polyester amino type and was completely cured at 200°C for one minute. Table 2 shows the details of the outer surfaces and the evaluated results.

### <Evaluation of scratch resistance>

The precursor labelled cans obtained in Examples 8 to 18 and Comparative Examples 4 and 5 were palletized (the precursor labelled cans were arranged in the pallets by using a palletizer). The above precursor labelled cans each group in a number of 10 were visually inspected for their outer surfaces and evaluated for their scratch resistance on the gravure-printed surfaces. The cans were evaluated to be (○) if they had no scratch, (Δ) if they had scratch to a slight degree, and (×) if any of them had scratch to an obvious degree. The products evaluated to be ○ and Δ were regarded to be acceptable.

### <Evaluation of vividness of images>

By using the optical microscope, the ink-jet print labelled cans obtained in Examples 8 to 18 and Comparative Examples 4 and 5 were inspected for their outer surfaces and were observed for their state of ink-jetted dots on the portions where the images were overlapped to evaluate vividness of images. The images were evaluated to be (○) if the ink-jetted dots were round and (×) if the dots were distorted or spread broad.

### <Example 9>

Ink-jet print labelled cans were produced and evaluated in the same manner as in Example 8 but having no white layer solidly printed on the whole surface. The evaluated results were as shown in Table 2.

### <Example 10>

Ink-jet print labelled cans were produced and evaluated in the same manner as in Example 8 but applying, by using the gravure-printing plate, the underlying layer on only the portion corresponding to the ink-jet printed image on the precursor label. The evaluated results were as shown in Table 2.

### <Example 11>

Ink-jet print labelled cans were produced and evaluated in the same manner as in Example 8 but ink-jet printing the underlying layer on the whole surface of the label. The evaluated results were as shown in Table 2. The underlying layer was formed by the ink-jet heads by using the polyester resin.

### <Example 12>

Ink-jet print labelled cans were produced and evaluated in the same manner as in Example 11 but ink-jet printing the underlying layer on only the portion corresponding to the ink-jet printed image on the precursor label. The evaluated results were as shown in Table 2.

### <Example 13>

Ink-jet print labelled cans were produced and evaluated in the same manner as in Example 8 but applying no underlying layer on the precursor label, applying the epoxy type resin on the whole outer surface of the precursor labelled can by using a curved surface coater followed by curing thereby to provide an underlying resin layer. The evaluated results were as shown in Table 2.

### <Example 14>

Ink-jet print labelled cans were produced and evaluated in the same manner as in Example 8 but applying no underlying layer on the precursor label, adjusting the position with respect to the image printed on the label by using a curved surface printing machine, applying partly the epoxy type resin onto the periphery corresponding to the image ink-jet printed on the outer surface of the precursor labelled can followed by curing thereby to provide an underlying resin layer. The evaluated results were as shown in Table 2.

### <Example 15>

Ink-jet print labelled cans were produced and evaluated in the same manner as in Example 8 but applying no underlying layer on the printed label, attaining the positioning by conducting the step of ink-jet printing by using the apparatus shown in Fig. 10, applying the epoxy type resin on the whole outer surface of the precursor labelled can by the ink-jet printing followed by false-curing with the hot air thereby to provide an underlying layer. The evaluated results were as shown in Table 2.

### <Example 16>

Ink-jet print labelled cans were produced and evaluated in the same manner as in Example 8 but applying no underlying layer on the precursor label, attaining the positioning by conducting the step of ink-jet printing by using the apparatus shown in Fig. 10, applying the polyester type resin partly on the outer surface of the precursor labelled can by the ink-jet printing followed by false-curing with the hot air thereby to provide an underlying layer. The evaluated results were as shown in Table 2.

### <Example 17>

A PET film was delivered, corona-treated on the outer surface side of the can, provided with a gravure-printed layer followed by curing and was taken up. Next, the film was delivered, solidly coated with a white layer on the whole surface thereof on the inner surface side of the can followed by curing and was taken up. Next, the gravure-printed layer was coated with an underlying layer followed by curing and was taken up. In other respects, the procedure was carried out in the same manner as in Example 8 to produce ink-j et print labelled cans which were then evaluated. The evaluated results were as shown in Table 2.

### <Example 18>

A PET film was delivered, corona-treated on the outer surface side of the can, solidly coated with a white layer on the whole surface thereof followed by curing in the oven and was taken up. Next, the film was delivered, provided with a gravure-printed layer on the white solidly printed layer followed by curing and was taken up. Next, film was delivered, coated with an underlying layer on the gravure-printed layer followed by curing and was taken up. Next, the film was delivered, coated with an adhesive layer on the inner surface side of the film followed by curing and was taken up. In other respects, the procedure was carried out in the same manner as in Example 8 to produce ink-jet print labelled cans which were then evaluated. The evaluated results were as shown in Table 2.

### <Comparative Example 4>

By using a curved surface coater, the obtained seamless cup was solidly coated on the whole outer surface thereof with a white layer. Next, the white solidly coated layer was coated with an underlying layer and was cured in the oven. Next, by using a relief printing plate, a fixed design was offset-printed on the curved surface followed by curing in the oven, and the cans were conveyed and palletized. In other respects, the procedure was carried out in the same manner as in Example 8 to produce ink-jet print labelled cans which were then evaluated. The evaluated results were as shown in Table 2.

### <Comparative Example 5>

Ink-jet print labelled cans were produced and evaluated in the same manner as in Example 8 but forming no underlying layer. The evaluated results were as shown in Table 2.

**Table 2**

| | Details of outer surface | | | Precursor label | | | | | Evaluation | |
|---|---|---|---|---|---|---|---|---|---|---|
| Layer consti tution | Top coating | IJP image | Underlying layer | Underlying layer | Transparent film | Gravure image | White solidly layer | Adhesive layer | Scratch resistance | Vividness of image |
| Ex. 8 | ○ | ○ | × | ○ (*1) | ○ | ○ | ○ | ○ | ○ | ○ |
| Ex. 9 | ○ | ○ | × | ○ (*1) | ○ | ○ | × | ○ | ○ | ○ |
| Ex. 10 | ○ | ○ | × | ○ (*2) | ○ | ○ | ○ | ○ | ○ | ○ |
| Ex. 11 | ○ | ○ | × | ○ (*3) | ○ | ○ | ○ | ○ | ○ | ○ |
| Ex. 12 | ○ | ○ | × | ○ (*4) | ○ | ○ | ○ | ○ | ○ | ○ |
| Ex. 13 | ○ | ○ | ○ (*1) | × | ○ | ○ | ○ | ○ | ○ | ○ |
| Ex. 14 | ○ | ○ | ○ (*2) | × | ○ | ○ | ○ | ○ | ○ | ○ |
| Ex. 15 | ○ | ○ | ○ (*3) | × | ○ | ○ | ○ | ○ | ○ | ○ |
| Ex. 16 | ○ | ○ | ○ (*4) | × | ○ | ○ | ○ | ○ | ○ | ○ |
| Ex. 17 | ○ | ○ | × | ○ (*1) | *5 | | ○ | ○ | Δ | ○ |
| Ex. 18 | ○ | ○ | × | ○ (*1) | *6 | | | ○ | Δ | ○ |
| Comp. Ex. 4 | ○ | ○ | *7 | | | | | | × | × (*8) |
| Comp. Ex. 5 | ○ | ○ | × | × | ○ | ○ | ○ | ○ | ○ | × (*9) |

| | | | | | | | | | | |
|---|---|---|---|---|---|---|---|---|---|---|
| *1: all over, *2: coated partly, *3: all over IJP, *4: coated partly IJP, *5: in order of gravure image/transparent film, *6: in order of gravure image/white solidly layer/transparent film, *7: in order of curved offset print layer/curved underlying layer/curved white solidly printed layer, *8: dots distorted, *9: dots spread | | | | | | | | | | |

### Industrial Applicability:

The printed film of the invention makes it possible to combine variable images by ink-jet printing, and can be favorably used for a variety of kinds of designs in small lots.

In the method of producing a printed film of the invention, further, the film can be once stored in a state of being printed with images by other method such as gravure printing. In this case, the otherwise printed images are covered with the transparent film or the underlying layer and have no probability of getting scratched. Thus, the method of the invention is capable of efficiently producing the printed film of the type that already has fixed designs printed thereon by, for example, gravure-printing and on which variable designs can be, further, printed.

**Description of Reference Numerals: [0081]**

| | | | |
|---|---|---|---|
| 1 | printed film | 2 | adhesive layer |
| 3 | otherwise printed image | 4 | transparent film |
| 5 | underlying layer | 6 | ink-jet image |
| 7 | top coating | 8, 9 | starting films |
| 10 | printed seamless can | 11 | delivery roll |
| 12 | gravure roll | 13 | ovens |
| 14 | take-up roll | 20 | delivery roll |
| 21 | coater | 22 | drying furnace |
| 23 | take-up roll | 32 | ink-jet heads |
| 100 | delivery roll | 101 | take-up roll |
| 103 | feed rolls | 104 | curing apparatus |
| 105 | underlying layer-forming apparatus | | |
| 110 | top coating agent applicator | | |
| 113 | heating apparatus | 115 | cooling apparatus |

## Claims

1. A printed film for containers, including a transparent film having ink-jet images printed thereon by ink-jet printing and other-printing images printed by a printing system other than the ink-jet printing, the ink-jet images being formed between a top coating and an underlying layer, and the other-printing images being formed between the underlying layer and an adhesive layer.

2. The printed film for containers according to claim 1,
wherein said transparent film is interposed between the ink-jet images and the other-printing, the ink-jet images and the top coating are formed on one surface of said transparent film via the underlying layer, and the other-printing images and the adhesive layer are formed on the other surface of said transparent film.

3. The printed film for containers according to claim 1 or 2, wherein the other-printing images are formed between said transparent film and the underlying layer.

4. The printed film for containers according to any one of claims 1 to 3, wherein said other printing system is a gravure printing, and a layer is, further, solidly printed over the whole surface after the gravure printing.

5. The printed film for containers according to any one of claims 1 to 4, wherein a coating material for forming the top coating, in its half-cured state, has adhesiveness to the adhesive layer.

6. A method of producing a printed film for containers, including steps of:
printing other-printing images on one surface of a transparent film by a printing system other than ink-jet printing;
forming an adhesive layer on the other-printing images;
forming an underlying layer on the other surface of the transparent film on which the other-printing images have been printed;
ink-jet printing ink-jet images on the underlying layer;
and
forming a top coating on at least the ink-jet images.

7. A method of producing a printed film for containers, including steps of:
printing other-printing images on one surface of a transparent film by a printing system other than ink-jet printing;
forming an underlying layer on the other surface of the transparent film on which the other-printing images have been printed;
ink-jet printing ink-jet images on the underlying layer;
forming a top coating on at least the ink-jet images; and
forming an adhesive layer on the other-printing images.

8. A printed seamless can having the printed film for containers of any one of claims 1 to 5 that is stuck to at least the body portion thereof.

9. A printed seamless can having ink-jet images and other-printing images printed by a printing system other than the ink-jet printing on a transparent film provided on the outer surface of at least the body portion of the seamless can, the ink-jet images being printed between a top coating and an underlying layer, and the other-printing images being printed between the underlying layer and an adhesive layer.
